Europäisches Patentamt

European Patent Office

Office européen des brevets

(19)

(11) Numéro de publication : **0 212 999**
**B1**

(12)                    **FASCICULE DE BREVET EUROPÉEN**

(45) Date de publication du fascicule du brevet :
03.01.90

(51) Int. Cl.⁵ : **B 01 D 11/02**, B 01 D 11/04

(21) Numéro de dépôt : 86401395.8

(22) Date de dépôt : 25.06.86

(54) **Procédé d'extraction-séparation-fractionnement par fluides supercritiques et dispositif pour sa mise en oeuvre.**

(30) Priorité : 09.07.85 FR 8510468

(43) Date de publication de la demande :
04.03.87 Bulletin 87/10

(45) Mention de la délivrance du brevet :
03.01.90 Bulletin 90/01

(84) Etats contractants désignés :
AT BE CH DE GB LI LU NL SE

(56) Documents cités :
EP–A– 0 002 988
FR–A– 2 321 673
US–A– 3 969 196
US–A– 4 015 960
US–A– 4 448 669

(73) Titulaire : SOCIETE NATIONALE ELF AQUITAINE
Société anonyme dite
Tour Elf 2, Place de la Coupole La Défense 6
F-92400 Courbevoie (FR)

(72) Inventeur : Perrut, Michel
35 rue du 4ème BCT
Saint-Nicolas de Port 54210 (FR)

(74) Mandataire : Hirsch, Marc-Roger
Cabinet Hirsch 34 rue de Bassano
F-75008 Paris (FR)

Jouve, 18, rue St-Denis, 75001 Paris, France

EP 0 212 999 B1

## Description

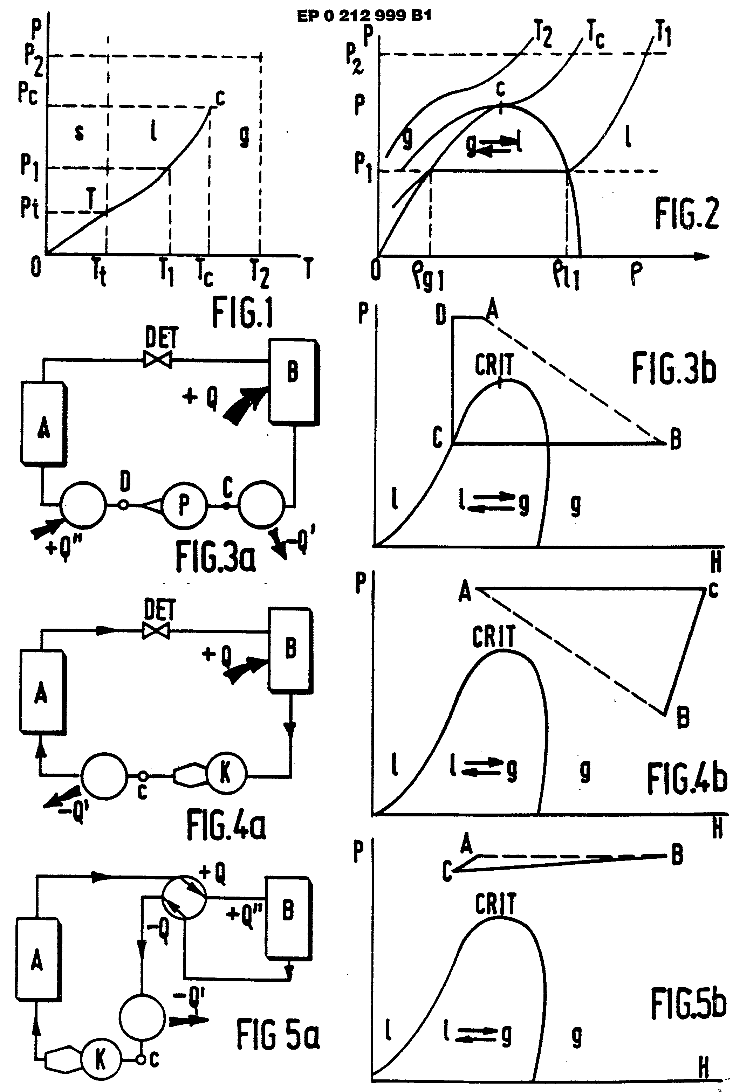

La présente invention a pour objet un nouveau procédé d'extraction et/ou séparation et/ou fractionnement à l'aide de fluides supercritiques. Elle concerne également un dispositif pour la mise en œuvre de ce procédé. Il convient tout d'abord de rappeler que lorsqu'un fluide pur ou un mélange se trouvent en deçà du point critique C, il existe un changement d'état entre phase gazeuse (ou vapeur) et phase liquide rencontré tant à la liquéfaction qu'à la vaporisation/ébullition. Dès que l'on se trouve au-delà du point critique C, ce changement d'état disparaît pour laisser place à un fluide supercritique phase unique mais caractérisé entre autres par des variations de masse volumique $\rho$ importantes. Si l'on se réfère aux diagrammes des figures 1 et 2 illustrant les divers états de changements d'états en fonction (figure 1) de la température T et de la pression p et (figure 2) de la masse volumique $\rho$ et de la pression p, on voit que (figure 1), si l'on se place à une pression $P_1$ comprise entre pression critique $P_c$ et pression $P_t$ au point triple T, lorsqu'on augmente la température, on passe de la phase liquide l à la phase gazeuse g. Si l'on se place à une pression $P_2$ supérieure à la pression critique $P_c$, on ne passe pas en augmentant la température par un changement d'état mais on reste dans le domaine du fluide supercritique (on mentionnera simplement ici la phase solide s qui ne concerne pas la présente invention).

Si l'on se reporte à la figure 2, on va trouver en se plaçant successivement aux pressions $P_1$ (sous-critique) et $P_2$ (supercritique) des courbes isothermes $T_c$ correspondant à la température critique, $T_1$ à une température sous-critique et $T_2$ à une température supercritique. A pression donnée, on voit que pour $P_1$ sous-critique, on rencontre un changement de masse volumique $\rho$ subit et important·quand on passe du gaz G au liquide l (ou inversement) avec palier de température et discontinuité dans la variation de masse volumique de chaque phase ($Pg_1$, $Pl_1$) au changement d'état tandis que pour la pression $P_2$ supercritique, on ne rencontre plus le changement et sa brusque variation de masse volumique, mais des variations importantes mais continues de masse volumique $\rho$ en fonction de la température.

Les procédés d'extraction-séparation-fractionnement par fluides supercritiques sont basés sur le fait que ces fluides présentent des propriétés remarquables par rapport aux liquides, notamment une plus faible viscosité et une plus grande diffusivité ; ils présentent une propriété plus intéressante encore, à savoir les caractéristiques de leur pouvoir solvant : ainsi, lorsqu'on passe de l'état gazeux sous-critique à l'état fluide supercritique, on rencontre non seulement des variations importantes de masse volumique comme on l'a souligné ci-dessus, mais également une augmentation considérable de la solubilité de tiers corps ; de plus, contrairement à l'extraction liquide-liquide ou liquide-solide, la séparation finale solvant-extrait ne constitue pas une étape difficile et coûteuse faisant appel par exemple à la réextraction par un second solvant ou à la distillation, mais peut être facilement mise en œuvre par simple détente isotherme ou voisine de l'isothermicité, ou par chauffage à pression constante ou par combinaison des deux modes précédents, la variation brutale du pouvoir solvant et la démixtion de l'extrait étant obtenus par une forte diminution de la masse volumique.

Ainsi, dans le document US-A-4 448 669 (SCINTA) est décrit un procédé d'extraction d'hydrocarbures contenus dans une terre de diatomées que l'on mélange à un solvant pour porter le tout dans des conditions supercritiques du solvant, au moins une partie des liquides étant ensuite extraite, par exemple en chambre cyclonique.

En fait, avant entrée dans le cyclone, la détente adiabatique et non isotherme du solvant entraîne la formation d'un brouillard consistant d'une part en une phase de solvant à faible masse volumique et d'autre part en liquide formé de gouttelettes contenant la plus grande partie de l'extrait peu soluble dans la première phase, mais des précautions indispensables ne sont pas prises pour éviter qu'une partie importante de l'extrait soit entraînée par la première phase, de sorte que le rendement de piégeage est faible.

Certaines de ces propriétés des fluides supercritiques ont été utilisées dans l'art antérieur en vue de la séparation, de l'extraction ou du fractionnement et en particulier en chromatographie (cf. EP-A-99 765).

Pour fixer les idées, on va à titre d'exemple, en présenter trois modes de réalisation faisant l'objet des figures 3 à 5, les figures à indice « a » représentant le schéma de circuit, les figures à indice « b » représentant sur diagramme enthalpique les cycles correspondants. Aux figures 3a à 5a, on a désigné par les lettres majuscules des points ou appareillages repérés par les mêmes lettres sur les diagrammes enthalpiques 3b à 5b. Sur ces mêmes diagrammes, l'étape séparative est représentée en pointillés sur le cycle. Aux figures 3 et 4, cette séparation solvant-extrait est réalisée par baisse de pression et apport de chaleur pour éviter le refroidissement dû à la détente, mais le recyclage du solvant diffère. Aux figures 3, on utilise une pompe P pour élever la pression du liquide condensé sous-critique et l'amener à l'état fluide supercritique, aux figures 4, on utilise un compresseur K pour amener le gaz sous-critique à l'état fluide supercritique puis un échangeur — Q' pour refroidir le fluide à la température désirée.

Aux figures 5, la séparation solvant-extrait est réalisée par élévation de température, le recyclage du solvant étant réalisé à l'aide du compresseur K fonctionnant à faible taux de compression en régime établi.

Pour être plus explicite, on va considérer les trois cas séparément :
Figures 3
A état supercritique

AB étape de séparation : détente dans le détendeur DET et apport de chaleur + Q pour arriver en B à l'état gazeux sous-critique

BC étape de condensation : par perte de chaleur — Q', le gaz se condense en liquide à pression constante sous-critique

CD étape de recompression : grâce à la pompe P pour remontée en pression supercritique

DA étape de réchauffage : par apport + Q" pour retour au point A de départ du cycle.

Figures 4

A état supercritique

AB étape de séparation : détente dans le détendeur DT pour parvenir avec apport de chaleur + Q en phase gazeuse sous-critique

BC étape de recompression : grâce au compresseur K remontée à la pression supercritique de départ

CA étape de refroidissement : pour retour au point de départ du cycle grâce à — Q'.

Figures 5

A état supercritique

AB étape de séparation : grâce au réchauffement + Q par échange thermique et + Q" par apport direct

BC étape de refroidissement : grâce à l'échangeur — Q avec le fluide en séparation se réchauffant et à — Q'

CA étape de recompression : dans le compresseur K avec léger réchauffement correspondant.

Malgré les contraintes techniques et les coûts élevés liés à l'utilisation de pressions élevées, l'extraction supercritique présente entre autres les avantages suivants :

— des économies d'énergie substantielles peuvent être réalisées par rapport aux procédés d'extraction classique comme on l'a souligné ci-dessus ;

— du fait des températures relativement basses en cause, on ne craint pas de dégradation des composants sensibles à la chaleur ;

— le fractionnement de l'extrait lui-même peut être effectué par détente en plusieurs étapes dans plusieurs pots de récupération ;

— le recours à un solvant supercritique non toxique tel $CO_2$ est bien adapté à la séparation ou à l'extraction de produits pour l'industrie alimentaire, ou pharmaceutique, pour la parfumerie ou le cosmétique et plus généralement pour toute industrie nécessitant l'élimination de produits nocifs à l'homme ou à la nature ;

— les solvants les plus courants ($CO_2$, $N_2O$, hydrocarbures légers notamment) sont de relativement faible prix de revient.

Dans les techniques de séparation solvant-extrait qui comme on l'a vu plus haut peuvent être mises en œuvre au cours d'une seule étape, on fait baisser fortement la masse volumique du solvant ce qui entraîne une forte variation de son pouvoir solvant de sorte que l'extrait se sépare du solvant devenu un gaz sous-critique ou un fluide supercritique de faible masse volumique.

Or, comme on l'a vu plus haut à propos du document US-A-4 448 669 (SCINTA), si ce principe est d'une séduisante simplicité, sa mise en œuvre pose un problème. En effet, on réalise généralement une détente quasi adiabatique et non isotherme du solvant dans l'organe de détente, ce qui entraîne la formation d'un brouillard consistant d'une part en une phase constituée par le solvant détendu à l'état de gaz sous-critique ou de fluide supercritique de faible masse volumique et, d'autre part, en une phase liquide constituée par des gouttelettes de solvant contenant la plus grande partie de l'extrait dont la solubilité dans la première phase de faible masse volumique est faible.

Dès lors, il importe de capter ces gouttelettes et d'évaporer le solvant, faute de quoi on observe un important entraînement de l'extrait par la phase de faible masse volumique (gaz sous-critique ou fluide supercritique) et le rendement du piégeage est médiocre. Ce mauvais résultat est couramment observé sur nombre d'extracteurs supercritiques de l'art antérieur peu efficaces pour atteindre des rendements acceptables dès lors qu'il faut extraire des substances nécessitant un taux de solvant élevé comme les arômes végétaux par exemple.

La présente invention a donc pour but :

— d'assurer la détente du milieu d'extraction ;

— d'apporter l'enthalpie nécessaire pour rendre cette détente quasi isotherme ;

— de recueillir l'extrait avec un rendement élevé.

Pour ce faire, les dispositifs, faisant l'objet de la présente invention, font appel :

— à une vanne réalisant ladite détente ;

— immédiatement en aval de cette vanne, à une dispositif séparateur des gouttelettes, les captant le long des parois où elles s'écoulent pour être recueillies dans un pot de recette chauffé, ainsi que lesdites parois par un fluide caloporteur.

Selon une caractéristique préférée de l'invention le système de collecte est du type cyclone, ce qui est connu en soi (voir US-A-4 448 669 cité ci-dessus), dans lequel est admis le brouillard par une tubulure débouchant dans le corps du cyclone dans des conditions bien définies et notamment à vitesse angulaire importante.

Pour mieux faire comprendre les caractéristiques techniques et les avantages de la présente invention, on va en décrire des exemples de réalisation étant bien entendu que ceux-ci ne sont pas limitatifs quant à leur mode de mise en œuvre et aux applications qu'on peut en faire.

En plus des figures 1 à 5 décrites ci-dessus, on se reportera aux figures suivantes qui représentent schématiquement :

— la figure 6 en coupe axiale, un dispositif d'extraction/séparation conforme à la présente invention ;

— la figure 7 un ensemble de tels dispositifs montés en série selon une variante de l'invention ;

— la figure 8 un autre ensemble de tels dispositifs montés en série selon une autre variante.

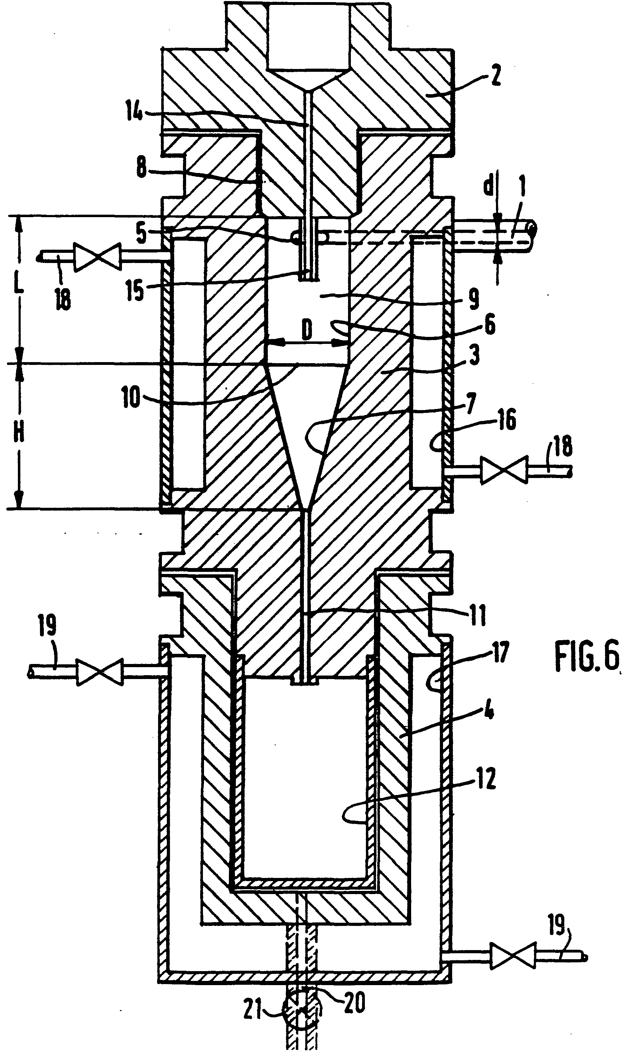

Sur cette figure 6, est omise la vanne d'entrée qui peut être tout vanne classique susceptible d'assurer une détente quasi adiabatique telle, en particulier, qu'une vanne à aiguille qu'il peut être avantageux de réchauffer pour en faciliter le fonctionnement.

Cette vanne est branchée directement sur la conduite d'entrée 1 du milieu d'extraction de diamètre intérieur d.

L'appareillage de la figure 6 comprend essentiellement trois parties démontables, une tête 2 d'extraction du solvant en vue de son recyclage, le corps 3 proprement dit du séparateur/extracteur et la recette 4. Ces divers éléments sont assemblés par tous moyens classiques adéquats (vissages, joints d'étanchéité essentiellement) non représentés pour simplifier.

La conduite d'entrée 1 pénètre dans le corps 3 et débouche tangentiellement en 5 dans un alésage cylindrique axial 6 terminé vers le bas par une partie conique 7 et bouché vers le haut par la saillie cylindrique 8 de la tête 2 venant s'ajuster dans l'alésage 6. La chambre 9 ainsi formée joue le rôle de cyclone. Sa partie cylindrique de diamètre D a une longueur L allant de la base du bouchon 8 à la section de raccordement 10 entre alésage cylindrique 6 et partie conique 7. A la base de cette dernière, de hauteur H et donc de diamètre D à sa section supérieure, est percé un canal axial d'évacuation 11 vers le pot 12 disposé dans la recette 4. La tête 2 et son prolongement inférieur formant bouchon 8 sont percés axialement par un canal axial d'évacuation 14 qui se prolonge en 15 vers l'intérieur de la chambre 9. Le corps 3 et le pot 4 présentent un chemisage ou double enveloppe (respectivement 16 et 17) pour la circulation d'un fluide caloporteur, ce qui permet d'assurer aux parois cyclindriques et coniques de la chambre 9 et au pot 12 de recette une température adéquate pour recueillir les gouttelettes, comme on le verra ci-dessous.

Immédiatement, à la sortie de la vanne détendeur non représentée, le fluide solvant contenant l'extrait pénètre par la canalisation 1 de diamètre intérieur d, dans la chambre 9 à une vitesse linéaire v et entraîne la rotation de la masse fluide contenue dans la chambre cyclonique 9. Des gouttelettes se séparent et, du fait de la force centrifuge, s'écoulent le long des parois pour être recueillies en passant par le canal 11 dans le pot 12.

Le fluide détendu débarrassé des gouttelettes sort par le canal central supérieur 15-14 vers le circuit de recyclage non représenté.

Dans une variante du dispositif de la figure 6, on peut omettre le pot de recette 12, une canalisation 20 équipée d'un robinet d'arrêt 21 permettant un soutirage direct des substances collectées (en pointillés sur la figure 6).

Si on désigne par $Q_m$ le débit massique entrant dans le dispositif de la figure 6 après détente, on peut calculer, grâce à une équation d'état telle que l'équation de Peng-Robinson, la masse volumique $\rho$, d'où le débit volumique $Q_v = Q_m/\rho$.

L'expérience montrant que l'on obtient de bons résultats pour $\rho V^2 < 2\,000$ kg/m$^{-1}$·sec$^{-2}$, on peut définir d pour que

$$V = \frac{4\,Q_v}{\pi d^2}$$

soit comprise entre 2 et 30 m/sec, et de préférence entre 2 et 10 m/sec.

En ce qui concerne le diamètre D de la chambre cyclonique 9, l'expérience a montré que l'on obtenait les meilleurs résultats pour $D = kd$ avec $2,5 \leqslant k \leqslant 4$. Ces expériences ont également montré que l'on obtient les meilleurs résultats avec $1,5\,D \leqslant L \leqslant 5\,D$ et $1,5\,D \leqslant H \leqslant 5\,D$, ce qui permet de définir les dimensions optimales de la chambre cyclonique 9.

Pour fixer les idées, on peut donner l'exemple suivant de réalisation.

On traite un débit massique $Q_m = 8$ kg/h de $CO_2$ chargé en faible teneur d'extrait (inférieur à 1 % massique par exemple) détendu à 60 bars et maintenu à 35 °C dans le dispositif ci-dessus décrit. La pression critique du $CO_2$ est 73 bars, sa température critique 31,3 °C. La détente à 60 bars a été obtenue dans le détendeur en amont du dispositif non représenté passant ainsi d'un fluide supercritique à un gaz sous-critique.

On peut recourir dans ce cas à un dispositif où le diamètre d de la canalisation d'entrée est de 2,5 mm, le diamètre D de la chambre cyclonique de 10 mm, la longueur L de sa partie cylindrique 20 mm et la hauteur H de sa partie conique 15 mm. Ce dispositif peut être réalisé en acier inoxydable avec des joints de polytétrafluoroéthylène (PTFE) entre les trois pièces principales (2, 3 et 4 figure 6), ce qui permet de résister par exemple à des pressions de l'ordre de 200 bars, à des températures voisines de l'ambiante (de 0 à 80 °C par exemple), en choisissant les épaisseurs adéquates calculées par les moyens classiques de la résistance des matériaux.

Le fluide caloporteur apporte par les chemisages ou doubles enveloppes 16 et 17, l'enthalpie nécessaire pour assurer les températures les plus propices à l'écoulement vers le pot 12 des gouttelettes centrifugées. On prévoira donc de préférence des raccords à fermeture automatique 18 et 19 schématiquement représentés sur la figure 6 pour pouvoir démonter la recette 4 et extraire le pot 12 sans avoir à vidanger l'ensemble du dispositif de son fluide caloporteur.

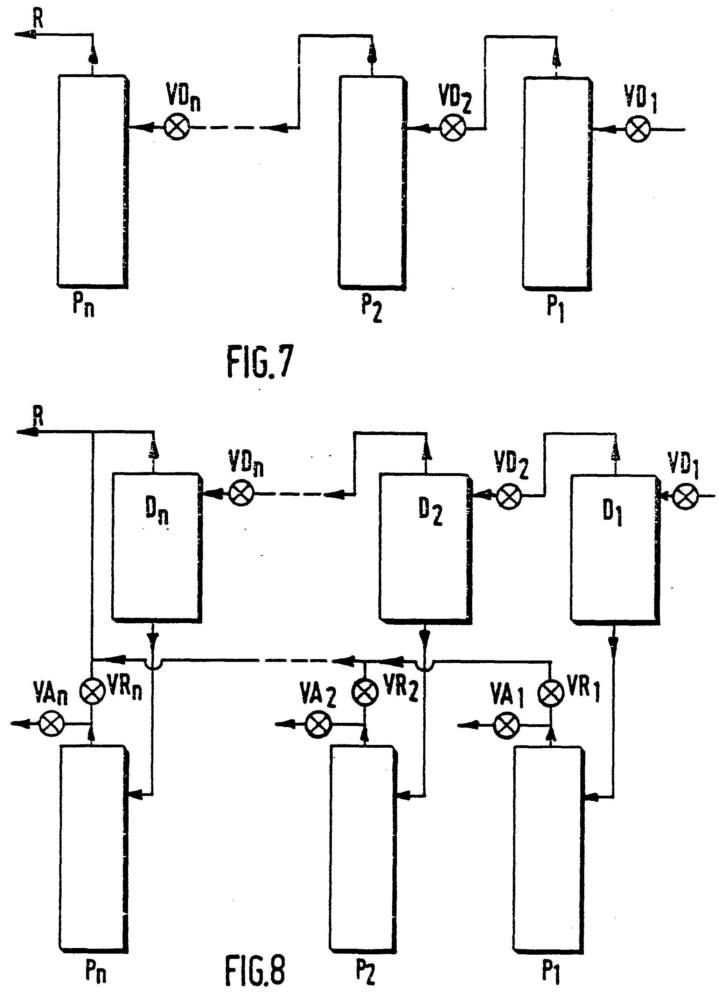

Selon une première variante, on peut utiliser (Fig. 7) plusieurs dispositifs successifs tels ceux de la figure 6 montés en série, et désignés par $P_1$, $P_2$, ...$P_n$. Chaque appareil est équipé de sa vanne de détente $VD_1$, $VD_2$, ...$VD_n$, la sortie solvant de chaque appareil étant commutée à l'entrée de la vanne de détente de l'appareil suivant. A chaque étage ainsi constitué, on recueille dans le pot de recette (ou dans la canalisation correspondante), les fractions ainsi séparées et le solvant est envoyé à l'étage suivant pour nouvelle séparation à pression plus basse obtenue grâce à la vanne de détente VD. On parfait ainsi progressivement, d'étage en étage, la séparation solvant/extrait.

On peut même envisager de réaliser un certain fractionnement de l'extrait, la composition des fractions de l'extrait dépendant de la pression opératoire.

Selon une autre variante, on peut utiliser (fig. 8) un ou plusieurs des appareillages conformes à l'invention, éventuellement disposés en série selon une configuration équivalente à celle de la fig. 7, non pas en vue de réaliser une détente étagée sur le flux principal solvant + extrait, mais afin de faciliter la récupération à la pression atmosphérique, ces produits ayant précipité dans un ou plusieurs pots de détente classiquement utilisés dans les installations mettant en œuvre les fluides supercritiques.

En se reportant à la figure 8, une série de pots de détente $D_1$, $D_2$ ... $D_n$, sont précédés de leurs vannes de détente $VD_1$, $VD_2$ ... $VD_n$, chaque sortie solvant de chaque pot de détente étant connectée à l'entrée de la vanne de détente de l'étage suivant. On obtient ainsi d'étage en étage une détente progressive. Ces extraits recueillis en partie basse de chaque pot sont généralement dissous dans un solvant à l'état liquide ou contiennent encore des quantités importantes de ce solvant ; ils sont envoyés à l'entrée des dispositifs $P_1$, $P_2$ ... $P_n$ conformes à l'invention qui vont donc fractionner les extraits issus des pots de détente $D_1$, $D_2$ ... $D_n$.

La sortie supérieure peut, soit être reliée à l'atmosphère ($VA_1$, $VA_2$ ... $VA_n$), soit si du solvant peut encore être récupéré, connectée à la récupération R via $VR_1$, $VR_2$, ... $VR_n$. On notera que si, sur la figure 7 on a prévu un appareil P conforme à l'invention pour chaque pot de détente D, il est possible de prévoir plusieurs appareils montés en série et à dépressions successives comme à la figure 7 pour traiter l'extrait d'un pot de détente $D_1$, $D_2$ ... $D_n$.

Cette variante de réalisation conforme à l'invention est très intéressante car, dans nombre d'installations de type classique, les rendements de récupération des extraits sont faibles et peu reproductibles lors de la remise à l'atmosphère des pots de détente pour récupération de l'extrait. En outre, et toujours dans ce cas, les pertes en gaz solvant sont également importantes. Par contre, en recourant comme à la figure 8, à des dispositifs conformes à l'invention (et en utilisant éventuellement des séries) on obtient des rendements à la fois plus élevés et plus reproductibles.

## Exemple d'application

Dans une installation comprenant un autoclave extracteur de 6 l et deux autoclaves de détente, on utilise une charge de vin rouge et comme fluide solvant du $CO_2$.

On effectue l'extraction à 150 bars, à 40 °C, avec 1 l de $CO_2$ par litre de vin traité.

En détente, dans le premier autoclave on baisse la pression à 70 bars à une température de 50 °C et dans le second on descendra à 40 bars, toujours à 50 °C. On récupère les extraits des pots de détente après extraction, par détente à l'atmosphère.

Si on détend directement à l'atmosphère dans le premier autoclave, on recueille 9 cm³ et 0,35 cm³ dans le second. La reproductibilité est mauvaise (± 50 % pour le premier pot, peu significatif pour le second).

Si on détend à l'atmosphère à travers les dispositifs conformes à l'invention (fig. 8) les quantités respectivement recueillies après passage dans les dispositifs conformes à l'invention sont de 30 cm³ et de 1 cm³ avec une reproductivilité à ± 10 % pour le premier autoclave et ± 30 % pour le second.

## Revendications

1. Procédé d'extraction-séparation-fractionnement dans lequel un fluide ou mélange de fluide à l'état supercritique et contenant les substances à extraire et/ou séparer et/ou fractionner est, après réduction de sa masse volumique introduit par une conduite d'amenée tangentiellement dans une chambre cyclonique comportant une partie cylindrique, ce dispositif étant caractérisé en ce que le diamètre d de ladite conduite (1) satisfait à l'équation suivante

$$d = 2 \sqrt{\frac{Q_v}{\pi v}}$$

avec

Q$_v$ = débit volumique dans la conduite

v = vitesse d'amenée du liquide comprise entre 2 et 30 m/sec et en ce que le diamètre D de la partie cylindrique (6) de la chambre cylindrique (9) est tel que

$$2{,}5 < \frac{D}{d} < 4$$

2. Procédé selon la revendication 1, caractérisé en ce que la hauteur L de la partie cylindrique (6) de la chambre cyclonique (9) est de 1,5 à 2 D.

3. Procédé selon la revendication 1 ou 2, caractérisé en ce que la hauteur H de la partie conique (7) de la chambre cyclonique est de 2,5 d à 4 d.

4. Dispositif pour la mise en œuvre du procédé selon une quelconque des revendications 1 à 3 dans lequel la partie cylindrique est une partie verticale (6) bouchée dans sa partie supérieure par une tête (2) munie d'un prolongement inférieur formant bouchon (8), cette tête (2) et ce prolongement inférieur (8) étant percés axialement par un canal d'évacuation (14), et dans lequel la partie inférieure conique (7) se terminant par une canalisation d'extraction axiale (11) des gouttes contenant les extraits s'écoulant le long des parois de la chambre, cette canalisation débouchant dans un pot de recette (12).

5. Dispositif selon la revendication 4, dans lequel la chambre cyclonique (9) est munie de dispositifs de chauffage (16).

6. Dispositif selon une des revendications 4 ou 5, dans lequel le pot de recette 12 est muni d'un dispositif de chauffage (17) des parois.

7. Dispositif selon une quelconque des revendications 4 à 6, dans lequel les dispositifs de chauffage (17, 19) des parois à chemisage.

8. Dispositif selon une quelconque des revendications 4 à 6, dans lequel les dispositifs de chauffage (17, 19) des parois sont des dispositifs à double paroi.

9. Dispositif selon une quelconque des revendications 1 à 8, dans lequel les dispositifs de chauffage sont isolés et rendent possible le démontage du pot de recette.

10. Ensemble d'extraction-séparation-fractionnement comportant des dispositifs selon une quelconque des revendications 4 à 9 montés en série, la sortie supérieure de la chambre cyclonique de l'un étant connectée à l'entrée du dispositif de réduction de la masse volumique de l'autre, l'ensemble opérant en détentes successives d'un étage à l'autre.

## Claims

1. Separation/extraction/cracking process in which a supercritical fluid or fluid mixture containing the substances to be extracted and/or separated and/or cracked is, after reducing its volumic mass introduced through an inlet pipe tangentially in a cyclonic chamber comprising a cylindrical portion, this device being characterized in that the diameter of the said pipe (1) satisfies to the following equation

$$d = 2 \sqrt{\frac{Q_v}{\pi v}}$$

with

Q$_v$ = volumic flow rate in the pipe

v = input speed of the fluid comprised between 2 and 30 m/sec and in that the diameter D of the cylindrical portion (6) of the cylindrical chamber (9) is such that

$$2{,}5 < \frac{D}{d} < 4$$

2. Method according to claim 1, characterized in that the length L of the cylindrical portion (6) of the cyclonic chamber (9) is comprised between 1.5 and 2 D.

3. Method according to claim 1 or 2, characterized in that the height H of the conical part (7) of the cyclonic chamber is comprised between 2.5 and 4 D.

4. Device for carrying out the process according to any one of claims 1 to 3, in which the cylindrical part is a vertical part (6) closed in its upper portion by a head (2) provided with a lower extended portion forming a stopper (8), this head (2) and this lower extended part (8) being axially bored by an evacuation channel (14), and in which the lower conical part (7) ends by an axial evacuation channel (11) of the drops containing the extracts flowing along the walls of the chamber, this channel issuing into a recovery pot (12).

5. Device according to claim 4, in which the cyclonic chamber (9) is provided with heating devices (16).

6. Device according to one of claims 4 or 5, in which the recovery pot (12) is provided with a device (7) for heating the walls.

7. Device according to one of claims 4 to 6, in which the heating devices (17, 19) of the walls are lined walls.

8. Device according to one of claims 4 to 6, in which the heating devices (17, 19) of the walls are double-cased devices.

9. Device according to any one of claims 1 to 8, in which the heating devices are insulated and allows the dismantling of the recovery pot.

10. Extraction/separation/cracking assembly comprising devices according to one of claims 4 to 9 series mounted, the upper outlet of the cyclonic chamber of one of them being connected to the input of the device for reducing the volumic mass of the other, the assembly operating from one stage to another in successive expansions.

## Patentansprüche

1. Extraktions-, Trennungs- und/oder Fraktionierungsverfahren, bei dem ein Fluid oder eine zu extrahierende, zu trennende oder zu fraktionierende Substanzen enthaltende Fluidmischung im überkritischen Zustand nach Absenkung ihrer spezifischen Masse durch eine Zufuhrleitung tangential in eine einen zylindrischen Teil aufweisende Zyklonkammer eingeführt wird, dadurch gekennzeichnet, dass der Durchmesser d der Zufuhrleitung (1) folgender Gleichung genügt :

$$d = 2 \sqrt{\frac{Q_v}{\pi v}}$$

wobei

$Q_v$ = Volumenstrom in der Zufuhrleitung

$v$ = Zuströmgeschwindigkeit der Flüssigkeit zwischen 2 und 30 m/s und dass der Durchmesser D des zylindrischen Teiles (6) der Zyklonkammer (9) so gewählt ist, dass

$$2{,}5 < \frac{D}{d} < 4$$

2. Verfahren nach Anspruch 1, dadurch gekennzeichnet, dass die Höhe L des zylindrischen Teiles (6) der Zyklonkammer (9) zwischen 1,5 × D und 2 × D liegt.

3. Verfahren nach einem der Ansprüche 1 oder 2, dadurch gekennzeichnet, dass die Höhe H des konischen Teiles (7) der Zyklonkammer zwischen 2,5 × d und 4 × d liegt.

4. Vorrichtung zur Durchführung des Verfahrens nach einem der Ansprüche 1 bis 3, in der der zylindrische Teil ein vertikaler Teil (6) ist, der oben durch einen mit einem einen Stopfen bildenden Unterteil (8) versehenen Kopf (2) verschlossen ist, wobei der Kopf (2) und der Unterteil (8) einen axialen Auslasskanal (14) enthalten, und in der der konische Unterteil (7) in einen axialen Abzugskanal (11) für die an den Kammerwänden herabfliessenden, das Extrakt enthaltenden Tropfen übergeht und der in einen Sammelbehälter (12) mündet.

5. Vorrichtung nach Anspruch 4, in dem die Zyklonkammer (9) mit einer Wandheizvorrichtung (16) versehen ist.

6. Vorrichtung nach einem der Ansprüche 4 oder 5, in dem der Sammelbehälter (12) mit einer Wandheizvorrichtung (17) versehen ist.

7. Vorrichtung nach einem der Ansprüche 5 oder 6, in der die Wandheizvorrichtungen (17, 19) mit Mantelwänden ausgebildet ist.

8. Vorrichtung nach einem der Ansprüche 4 bis 6, in der die Wandheizvorrichtungen (17, 19) doppelwandige Vorrichtungen sind.

9. Vorrichtung nach einem der Ansprüche 1 bis 8, in dem die Heizvorrichtungen isoliert sind und den Ausbau des Sammelbehälters (12) gestatten.

10. Extraktions-, Trennungs und/oder Fraktionierungsanlage mit hintereinandergeschalteten Vorrichtungen nach einem der Ansprüche 4 bis 9, bei der der obere Auslasskanal der Zyklonkammer der einen Vorrichtung mit dem Eingang der Entspannungsvorrichtung der anderen Vorrichtung verbunden ist, wobei die Anlage in aufeinanderfolgenden Entspannungsschritten arbeitet.

FIG.1

FIG.2

FIG.3a

FIG.3b

FIG.4a

FIG.4b

FIG 5a

FIG.5b

FIG.6

R

VD_n    VD_2    VD_1

P_n    P_2    P_1

FIG.7

R

VD_n    VD_2    VD_1

D_n    D_2    D_1

VA_n  VR_n    VA_2  VR_2    VA_1  VR_1

P_n    FIG.8    P_2    P_1